# EUROPÄISCHE PATENTSCHRIFT

(11) **EP 0 501 133 B1**
(45) Veröffentlichungstag und Bekanntmachung des Hinweises auf die Patenterteilung: **31.08.1994**
(21) Anmeldenummer: 92100865.2
(22) Anmeldetag: 20.01.1992
(51) Int. Cl.: B60Q 1/05

(54) **Schwenkbarer Scheinwerfer für Fahrzeuge, insbesondere Personenwagen**
Retractable head lamp for vehicle particularly for a passenger car
Phare rétractable pour véhicule principalement pour voiture particulière

(30) Priorität: 27.02.1991 DE 4106091
(43) Veröffentlichungstag der Anmeldung: 02.09.1992
(73) Patentinhaber: Dr.Ing.h.c. F. Porsche Aktiengesellschaft, 70435 Stuttgart (DE)
(72) Erfinder: Peter, Dietmar, W-7251 Hemmingen (DE); Lehmann, Klaus-Peter, W-7130 Mühlacker (DE); Rijsbergen, Markus, W-7533 Tiefenbronn-Lehningen (DE)

(56) Entgegenhaltungen:
- DE-B- 2 708 374

## Beschreibung

Die Erfindung betrifft einen schwenkbaren Scheinwerfer nach dem Oberbegriff des Patentanspruchs 1.

Es ist ein gattungsgemäßer Scheinwerfer bekannt (DE-B-2708 374), der bezüglich Scheinwerferfunktion und Sicherheitsvorkehrung - Personenschutz und Motorüberlastsicherung - gute Ergebnisse liefert. Gleichwohl bietet er Raum für konstruktive Verbesserungen, namentlich um seinen Leuchtenkörper leicht auswechseln zu können.

Es ist deshalb Aufgabe der Erfindung, an dem schwenkbaren Scheinwerfer solche Vorkehrungen zu treffen, daß der Leuchtenkörper zum Wechseln gegebenenfalls auch elektrische Kabel, Teile der Betätigungsvorrichtung oder dergleichen leicht zugänglich sind.

Erfindungsgemäß wird diese Aufgabe durch die kennzeichnenden Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß der Scheinwerfer in eine Montagestellung bewegbar und in dieser mit einer Fixierungsvorrichtung festsetzbar ist, wodurch nicht nur Leuchtenkörper des Scheinwerfers leicht austauschbar sind, sondern auch elektrische Kabel oder andere Bauteile des Scheinwerfers einfach überprüfbar - gegebenenfalls auch instandsetzbar sind. Die Montagestellung lässt sich konstruktiv günstig realisieren, wenn die Tragvorrichtung zwei relativ zueinander verdrehbare Glieder umfasst, die mittels einer Rastvorrichtung in Lage gehalten werden. Diese Konstruktion gewährleistet darüber hinaus, daß am Fahrzeug stehende Personen durch die Schwenkbewegung des Scheinwerfers nicht verletzt und bei Angriff eines Widerstandes am Scheinwerfer der Elektromotor der Betätigungsvorrichtung nicht beschädigt wird.

Die Fixierungsvorrichtung, mit der der Scheinwerfer aus der Arbeitsstellung entriegelt und in der Montagestellung festsetzbar ist, ist zum einen ein mit übersichtlichen Mitteln zu verwirklichendes Bauteil. Außerdem ist sie vom Motorraum aus problemlos bedienbar.

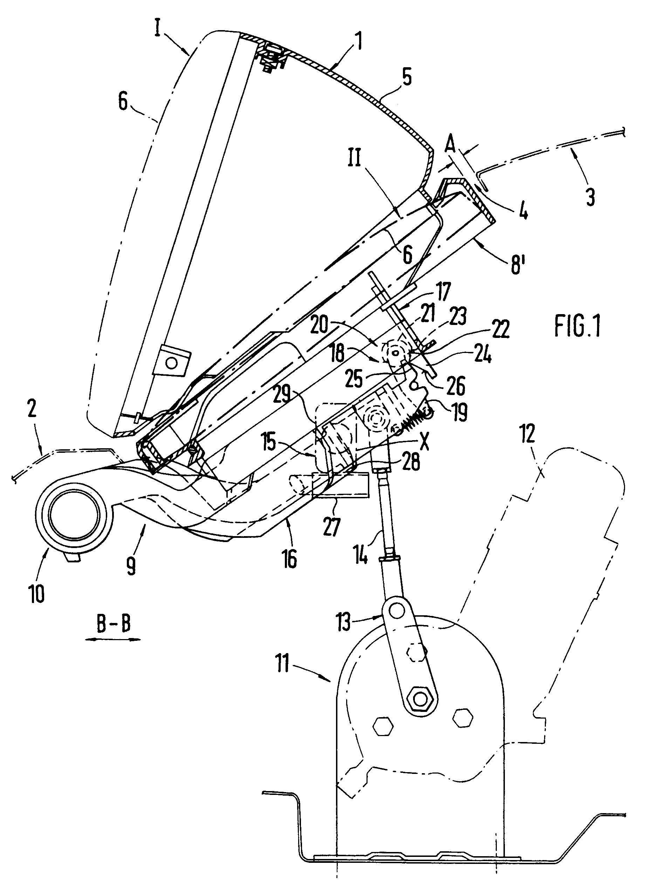

In der Zeichnung wird ein Ausführungsbeispiel der Erfindung gezeigt, das nachstehend näher beschrieben ist.
Es zeigt
- Fig. 1: eine Teilseitenansicht eines Personenwagens mit dem erfindungsgemäßen schwenkbaren Scheinwerfer,
- Fig. 2: eine Teilansicht der Fig. 1 mit einer anderen Stellung des schwenkbaren Scheinwerfers,

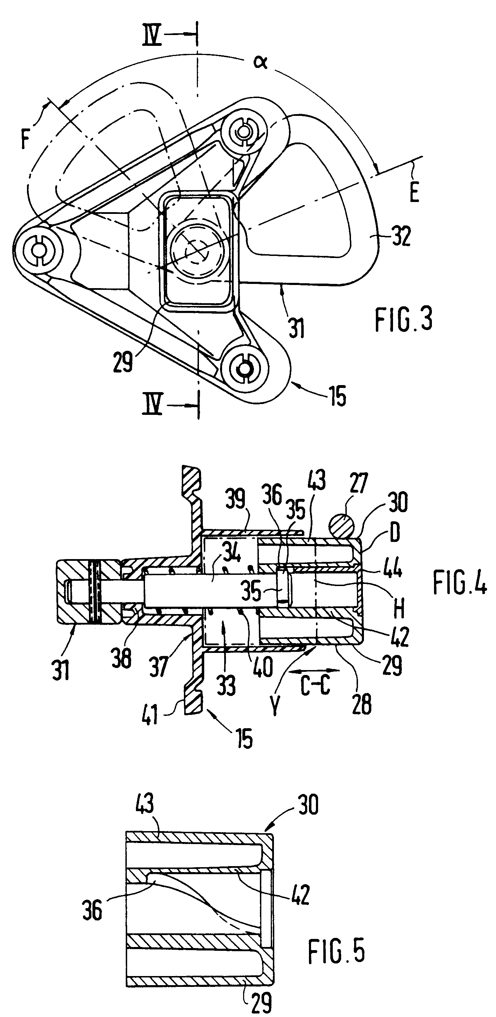

- Fig. 3: eine Einzelheit X der Fig. 1 in detaillierter Form und größerem Maßstab;
- Fig. 4: einen Schnitt nach der Linie IV-IV der Fig. 3,
- Fig. 5: eine Einzelheit Y der Fig. 4 in größerem Maßstab.

Ein schwenkbarer Scheinwerfer 1 ist im Bug 2 eines nicht näher dargestellten Personenwagens angeordnet. Ein Kotflügel 3 weist eine Öffnung 4 zur Aufnahme des Scheinwerfers 1 auf.

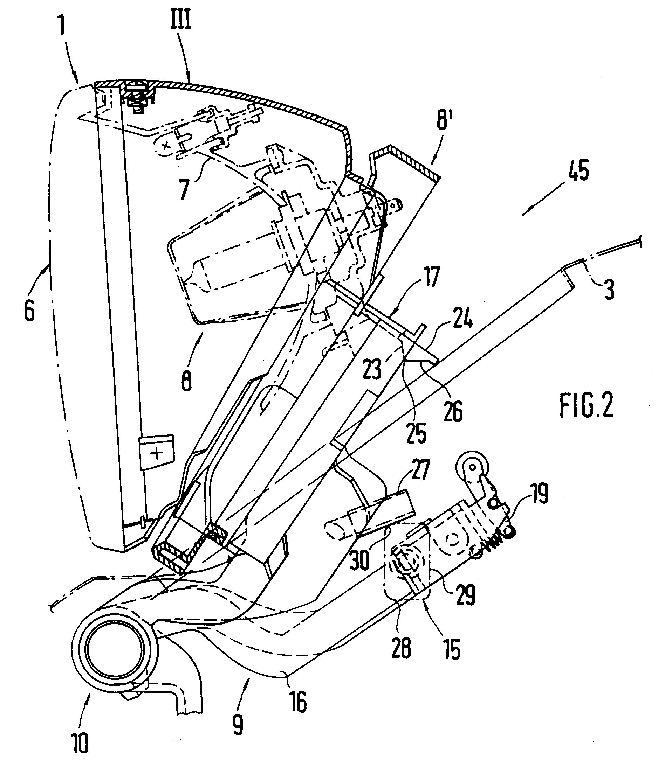

Der Scheinwerfer 1 umfasst ein Gehäuse 5, eine Streuscheibe 6, einen Reflektor 7 (Fig. 2) und wenigstens einen Leuchtenkörper 8. Das Gehäuse 5 ist kuppelartig ausgebildet und erstreckt sich zwischen der Streuscheibe 6 und einer entfernt von letzterer angeordneten kragenartigen Abdeckung 8', deren Umfang geringfügig kleiner ist als der der Öffnung 4 - Abstand A -.

Zur Halterung des Scheinwerfers 1 dient eine Tragvorrichtung 9, die an einer Welle 10 gelagert ist; sie erstreckt sich quer zur Fahrzeuglängsrichtung B-B. Mit 11 ist eine Betätigungsvorrichtung bezeichnet, die durch einen Elektromotor 12 sowie ein Kurbelgetriebe 13 gebildet wird. Das Kurbelgetriebe 13 greift mit einer Schubstange 14 in der Tragvorrichtung 9 an.

Durch die Welle 10 und die Betätigungsvorrichtung 11 ist der Scheinwerfer 1 aus einer Arbeitsstellung I in eine versenkte Ruhestellung II verschwenkbar und vice versa. Dabei ist die Drehrichtung unter der Voraussetzung, daß der Personenwagen eine Stellung "in Fahrtbewegung von rechts nach links" einnimmt, im Uhrzeigersinn. In der Ruhestellung II ist die Streuscheibe 6 sichtbar und geneigt in der Aufbauwand des Kotflügels 3 angebracht; in der Arbeitsstellung II, wo das Kurbelgetriebe 13 nahezu Totpunktlage einnimmt, ist die Streuscheibe 6 aufrechter. Aus der Arbeitsstellung II kann der Scheinwerfer 1 manuell in eine Montagestellung III bewegt (Fig. 2) und dort mittels einer Fixierungsvorrichtung 15 festgesetzt werden.

Hierzu weist die Tragvorrichtung 9 zwei Glieder 16, 17 auf. Das erste Glied 16 ist mit der Betätigungsvorrichtung 11 verbunden und fest an der Welle 10 angebracht. Dagegen ist das zweite Glied 17 relativ beweglich zum ersten Glied 16 auf der Welle 10 gelagert; das zweite Glied 17 trägt den Scheinwerfer 1. Außerdem ist zwischen dem ersten Glied 16 und dem zweiten Glied 17 eine Rastvorrichtung 18 wirksam, die entfernt von der Welle 10 an der Tragvorrichtung 9 befestigt ist.

Die Rastvorrichtung 18 umfasst einen federbelasteten, schwenkbaren Hebel 19, der an einer freien Seite 20 mit einem eine Gleitrolle 21 aufweisenden Stützelement 22 versehen ist. Das Stützelement 22 hintergreift eine Kulisse 23. Im Ausführungsbeispiel ist der Hebel 19 am ersten Glied 16 angebracht. Dagegen ist die Kulisse 23 an einer Tragwand 24 vorgesehen. Die Kulisse 23 bildet eine schräge zur Tragwand 24 und geht nach einer Spitze 25 in eine Anlaufbahn 26 über.

Am ersten Glied 16 ist ein fester Anschlag 27 angeordnet, der in der Arbeitsstellung I an einer ersten Stützseite 28 eines Stützgliedes 29 der Fixierungsvorrichtung 15 anliegt. In der Montagestellung III dagegen ruht der Anschlag 27 an einer zweiten Stützseite 30 des Stützgliedes 29.

Das Stützglied 29 ist ein zylindrisches Bauteil mit viereckigem Querschnitt und axialbeweglich, und zwar etwa parallel, zur Welle 10 ausgebildet. Durch Axialbewegungen des Stützgliedes 29 - in Richtung C-C - (Fig. 4) kann der Anschlag 27 jeweils an der ersten Stützseite 28 oder der zweiten Stützseite 30 zur Anlage gebracht werden.

Die Axialbewegungen C-C des Stützgliedes 29 werden durch Teilkreisbewegungen im Bereich α eines Hebels 31 bewerkstelligt, der mit einer Handhabe 32 versehen ist. Hierzu ist zwischen dem Hebel 31 und dem Stützglied 29 eine Übertragungseinrichtung 33 vorgesehen. Die Übertragungseinrichtung 33 umfasst einen Drehzapfen 34 und einen dazu quer angebrachten Mitnehmer 35, der mit einer gewindeartigen Nut 36 im Stützglied 29 wegübertragend zusammenwirkt; die Nut 36 weist eine relativ gestreckte Steigung auf (kurze Drehbewegung; langer Hub). Der Hebel 31, die Übertragungseinrichtung 33 und das Stützglied 29 sind einem Gehäuse 37 der Fixierungseinrichtung 15 zugeordnet, das einen Lagerabschnitt 38 für den Drehzapfen 34 und einen Führungsabschnitt 39 für das Stützglied 29 aufweist. Den Drehzapfen 34 umgibt eine Druckfeder 40, die das Stützglied 29 in seine ausgefahrene Stellung D zu bewegen sucht.

Zwischen Lagerabschnitt 38 und Führungsabschnitt 39 erstreckt sich ein Befestigungsflansch 41, der z.B. an einer festen, einen Motorraum begrenzenden Wand mittels Schrauben gehalten ist. Durch diese Anordnung ist die Handhabe 32 nach Öffnen einer Motorhaube zugänglich.

Schließlich weist das Stützglied 28 einen inneren Rohrabschnitt 42 und einen äußeren Rohrabschnitt 43 auf. Der äußere Rohrabschnitt 43 - er ist ja viereckig - ruht in dem Führungsabschnitt 39. Der innere Rohrabschnitt 42 umfasst die Nut 36 und einen kreisförmigen Querschnitt. Auf der freien Seite des Stützgliedes 29 ist der Rohrabschnitt 42 mit einem Deckel 44 abgedeckt.

Soll der Leuchtenkörper 7 gewechselt werden, wird der Scheinwerfer 1 zunächst in die Betriebsstellung I gebracht. Danach wird die Handhabe 32 durch Ausrücken der Rastvorrichtung 18 aus der Stellung E in die Stellung F gebracht, wodurch das Stützglied 29 eingezogen wird (Stellung H). Der Anschlag 27 ist jetzt freigegeben und der Scheinwerfer 1 kann manuell durch Ausrücken der Rastvorrichtung 18 in die Montagestellung III bewegt werden. Nachdem die Handhabe 32 ihre Stellung D, unterstützt durch die Druckfeder 34, wieder einnimmt, ist der Scheinwerfer 1 in der Betriebsstellung III festgelegt. Zwischen der Abdeckung 8' und dem Kotflügel 3 ist in letzterer Stellung ein Spalt 45 vorgesehen (Fig. 2), über den der Leuchtenkörper 8 - gegebenenfalls auch andere Bauteile - zugänglich ist.

## Patentansprüche

1. Schwenkbarer Scheinwerfer (1) für Fahrzeuge, insbesondere Personenwagen, der unter Vermittlung einer Tragvorrichtung (9) drehbar an einer Welle (10) angebracht und aus einer Arbeitsstellung (I) in eine versenkte Ruhestellung (II) über eine Betätigungsvorrichtung (11) bewegbar ist, wobei der Scheinwerfer (1) an der Welle (10) derart angelenkt ist, daß seine Streuscheibe (6) in der Ruhestellung (II) sichtbar und geneigt in einer Aufbauwand (3) angeordnet ist, wogegen die Streuscheibe in der Arbeitsstellung aufrechter steht, **dadurch gekennzeichnet**, daß der Scheinwerfer (1) beispielsweise zum Wechseln eines Leuchtenkörpers (8) aus der Arbeitsstellung (I) in eine geeignete Montagestellung (III) bewegbar und dort mittels einer Fixierungsvorrichtung (15) festsetzbar ist.

2. Schwenkbarer Scheinwerfer nach Anspruch 1, **dadurch gekennzeichnet**, daß die Tragvorrichtung (9) zwei Glieder (16, 17) umfasst, wovon an der Welle (10) das erste mit der Betätigungsvorrichtung (11) verbundene Glied (16) fest und das zweite, den Scheinwerfer (1) aufnehmende Glied (17) relativ drehbar zum ersten Glied (16) angebracht ist, wobei zwischen dem ersten Glied (16) und dem zweiten Glied (17) eine Rastvorrichtung (18) vorgesehen ist.

3. Schwenkbarer Scheinwerfer nach Anspruch 2, **dadurch gekennzeichnet**, daß die Rastvorrichtung (18) einen federbelasteten Hebel (19) umfasst, der mit einem Stützelement (22) eine Kulisse (23) hintergreift.

4. Schwenkbarer Scheinwerfer nach Anspruch 3, **dadurch gekennzeichnet**, daß der Hebel (19) am ersten Glied (16) und die Kulisse (23) am zweiten Glied (17) vorgesehen ist.

5. Schwenkbarer Scheinwerfer nach einem oder mehreren der vorangehenden Ansprüche, **dadurch gekennzeichnet**, daß am ersten Glied (16) ein fester Anschlag (27) vorgesehen ist, der sich in der Arbeitsstellung (I) an einer ersten Stützseite (28) und in der Montagestellung (III) an einer zweiten Stützseite (30) eines Stützgliedes (29) der Fixierungsvorrichtung (15) abstützt.

6. Schwenkbarer Scheinwerfer nach einem oder mehreren der vorangehenden Ansprüche, **dadurch gekennzeichnet**, daß das Stützglied (29) ein zylindrisches Bauteil ist, wobei der Anschlag (27) durch Axialbewegungen (C-C) - parallel zur Welle (10) - des Stützgliedes (29) der Fixierungsvorrichtung (15) an seinen Stützseiten (28 oder 30) zur Anlage gebracht werden kann.

7. Schwenkbarer Scheinwerfer nach Anspruch 6, **dadurch gekennzeichnet**, daß die Axialbewegungen (C-C) des Stützgliedes (29) durch Teilkreisbewegungen (Bereich α) eines z.B. mit einer Handhabe (32) versehenen Hebels (31) erfolgt, der durch eine Übertragungseinrichtung (33) mit dem Stützglied (29) verbunden ist.

8. Schwenkbarer Scheinwerfer nach Anspruch 7, **dadurch gekennzeichnet**, daß die Übertragungseinrichtung (33) einen Drehzapfen (34) mit dazu quer angeordnetem Mitnehmer (35) aufweist, der mit einer gewindeartigen Nut (36) des Stützgliedes (29) zusammenwirkt.

9. Schwenkbarer Scheinwerfer nach einem oder mehreren der vorangehenden Ansprüche, **dadurch gekennzeichnet**, daß ein z.B. aus Kunststoff bestehendes Gehäuse (37) der Fixierungsvorrichtung (15) einen Lagerabschnitt (38) für den Drehzapfen (34) und einen Führungsabschnitt (39) für das Stützglied (29) aufweist.

10. Schwenkbarer Scheinwerfer nach einem oder mehreren der vorangehenden Ansprüche, **dadurch gekennzeichnet**, daß den Drehzapfen (34) eine Druckfeder (40) umgibt, die das Stützglied (29) in eine ausgefahrene Stellung (D) zu bewegen sucht.

11. Schwenkbarer Scheinwerfer nach Anspruch 9, **dadurch gekennzeichnet**, daß zwischen Lagerabschnitt (38) und Führungsabschnitt (39) ein Befestigungsflansch (41) für das Gehäuse (37) vorgesehen ist.

12. Schwenkbarer Scheinwerfer nach einem oder mehreren der vorangehenden Ansprüche, **dadurch gekennzeichnet**, daß das Stützglied (29) einen inneren, die Nut (36) aufweisenden, kreisförmigen Rohrabschnitt (42) und einen äußeren rechteckigen Rohrabschnitt (43) umfasst, der in dem korrespondierenden Führungsabschnitt (39) ruht.

13. Schwenkbarer Scheinwerfer nach einem oder mehreren der vorangehenden Ansprüche, **dadurch gekennzeichnet**, daß der Hebel (32) mit der Handhabe (31) nach Öffnen einer Haube, z.B. Motorhaube, zugänglich ist.

## Claims

1. A pivotable headlamp (1) for vehicles, in particular passenger cars, mounted rotatably on a shaft (10) by means of a support device (9) and movable from an operating position (I) into a lowered rest position (II) by way of an actuating device (11), wherein the headlamp (1) is articulated to the shaft (10) in such a way that the diffusing lens (6) thereof is mounted in a wall (3) of the body so as to be visible and inclined in the rest position (II), whereas the diffusing lens is more upright in the operating position, **characterized in that** the headlamp (1) is movable from the operating position (I) into an inclined assembly position (III), for example for changing a lighting element (8) and can be fixed there by means of a fixing device (15).

2. A pivotable headlamp according to Claim 1, **characterized in that** the support device (9) comprises two members (16, 17), of which the first member (16) connected to the actuating device (11) is fixedly mounted on the shalt (10) and the second member (17) receiving the headlamp (1) is rotatably mounted on the shaft (10) relative to the first member (16), wherein a catch device (18) is provided between the first member (16) and the second member (17).

3. A pivotable headlamp according to Claim 2, **characterized in that** the catch device (18) comprises a spring-loaded lever (19) which with a support member (22) engages behind a sliding block (23).

4. A pivotable headlamp according to Claim 3, **characterized in that** the lever (19) is provided on the first member (16) and the sliding block (23) is provided on the second member (17).

5. A pivotable headlamp according to one or more of the preceding Claims, **characterized in that** a fixed stop (27) is provided on the first member (16) and is supported on a first supporting side (28) of a support member (29) of the fixing device (15) in the operating position (I) and on a second supporting side (30) in the assembly position (III).

6. A pivotable headlamp according to one or more of the preceding Claims, **characterized in that** the support member (29) is a cylindrical component, wherein the stop (27) can be made to abut on the supporting sides (28 or 30) of the support member (29) of the fixing device (15) by axial movements (C-C) thereof parallel to the shaft (10).

7. A pivotable headlamp according to Claim 6, **characterized in that** the axial movements (C-C) of the support member (29) are formed by partial circular movements (area α) of a lever (31) provided with a handle (32) for example and connected to the support member (29) by way of a transmission device (33).

8. A pivotable headlamp according to Claim 7, **characterized in that** the transmission device (33) has a pivot pin (34) with an entrainment means (35) arranged obliquely thereto and cooperating with a thread-like groove (36) of the support member (29).

9. A pivotable headlamp according to one or more of the preceding Claims, **characterized in that** a housing (37) - consisting of plastics material for example - of the fixing device (15) has a bearing portion (38) for the pivot pin (34) and a guiding portion (39) for the support member (29).

10. A pivotable headlamp according to one or more of the preceding Claims, **characterized in that** the pivot pin (34) is surrounded by a compression spring (40) urging the support member (29) into an extended position (D).

11. A pivotable headlamp according to Claim 9, **characterized in that** a fastening flange (41) for the housing (37) is provided between the bearing portion (38) and the guiding portion (39).

12. A pivotable headlamp according to one or more of the preceding Claims, **characterized in that** the support member (29) has an inner circular tube portion (42), provided with the groove (36), and an outer rectangular tube portion (43) resting in the corresponding guiding portion (39).

13. A pivotable headlamp according to one or more of the preceding Claims, **characterized in that** the lever (32) with the handle (31) is accessible after opening a cover, for example the engine bonnet.

## Revendications

1. Phare (1) rétractable pour véhicule automobile en particulier pour voiture de tourisme, qui, par l'intermédiaire d'un dispositif de support (9), est monté tournant sur un arbre (10) et peut passer d'une position de travail (I) dans une position de repos (II) encastrée, par l'intermédiaire d'un dispositif d'actionnement (11), le phare (1) s'articulant sur l'arbre (10) de manière que son diffuseur (10) soit visible en position de repos (II) et soit monté incliné dans une paroi (3) de la carrosserie, le diffuseur étant en revanche vertical en position de travail, caractérisé en ce que le phare (1) peut passer, par exemple pour changer un corps d'éclairage (8), de la position de travail (I) dans une position de montage (III) inclinée et peut être fixé à cet endroit au moyen d'un dispositif de fixation (15).

2. Phare rétractable selon la revendication 1, caractérisé en ce que le dispositif de support (9) comporte deux organes (16, 17) dont le premier organe (16), relié au dispositif d'actionnement (11), est monté fixe sur l'arbre (10) et le second organe (17), logeant le phare (1), est monté tournant par rapport au premier organe (16), un dispositif d'encliquetage (18) étant prévu entre le premier organe (16) et le second organe (17).

3. Phare rétractable selon la revendication 2, caractérisé en ce que le dispositif d'encliquetage (18) comporte un levier (19) soumis à l'action d'un ressort qui, avec un élément d'appui (22), passe derrière une glissière (23).

4. Phare rétractable selon la revendication 3, caractérisé en ce que le levier (19) est prévu sur le premier organe (16) et la glissière (23) sur le second organe (17).

5. Phare rétractable selon une ou plusieurs des revendications précédentes, caractérisé en ce que sur le premier organe (16) il est prévu une butée (27) fixe qui, en position de travail (I), prend appui contre un premier côté d'appui (28) et en position de montage (III), contre un second côté d'appui (30) d'un organe d'appui (29) du dispositif de fixation (15).

6. Phare rétractable selon une ou plusieurs des revendications précédentes, caractérisé en ce que l'organe d'appui (29) est un composant cylindrique, la butée (27) pouvant être amenée en application contre ses côtés d'appui (28 ou 30), par des déplacements axiaux (C-C) - parallèles à l'arbre (10) - de l'organe d'appui (29) du dispositif de fixation (15).

7. Phare rétractable selon la revendication 6, caractérisé en ce que les déplacements axiaux (C-C) de l'organe d'appui (29) s'effectuent par des déplacements circulaires partiels (zone α) d'un levier (31), pourvu d'une poignée (32), lequel levier est relié à l'organe d'appui (29) par un dispositif de transmission (33).

8. Phare rétractable selon la revendication 7, caractérisé en ce que le dispositif de transmission (33) comporte un pivot (34) avec un entraîneur (35), placé transversalement à celui-ci, qui coopère avec une rainure (36) filetée de l'organe d'appui (29).

9. Phare rétractable selon une ou plusieurs des revendications précédentes, caractérisé en ce qu'un boîtier (37), par exemple en matière plastique, du dispositif de fixation (15), comporte une partie de palier (38) pour le pivot (34) et une partie de guidage (39) pour l'organe d'appui (29).

10. Phare rétractable selon une ou plusieurs des revendications précédentes, caractérisé en ce que le pivot (34) est entouré par un ressort de pression (40) qui tend à déplacer l'organe d'appui (29) dans une position (D) extraite.

11. Phare rétractable selon la revendication 9, caractérisé en ce qu'entre la partie de palier (38) et la partie de guidage (39) il est prévu une bride de fixation (41) pour le boîtier (37).

12. Phare rétractable selon une ou plusieurs des revendications précédentes, caractérisé en ce que l'organe d'appui (29) comporte une partie tubulaire (42) circulaire, intérieure, présentant la rainure (36) et une partie tubulaire (43) rectangulaire extérieure, qui repose dans la partie de guidage (39) correspondante.

13. Phare rétractable selon une ou plusieurs des revendications précédentes, caractérisé en ce que le levier (32) avec la poignée (31) est accessible après ouverture d'un capot, par exemple le capot du moteur.
